# EUROPEAN PATENT APPLICATION

(11) **EP 1 852 491 A1**
(43) Date of publication of application: **07.11.2007**
(21) Application number: 06113567.9
(22) Date of filing: 05.05.2006
(51) Int. Cl.: C10B 53/02, C10B 57/08, C10G 1/00

(54) **Mild pyrolysis of carbon-based energy carrier material**

(71) Applicant: BIOeCON International Holding N.V., Curaçao (AN)
(72) Inventor: O'Connor, Paul, 3871 KM Hoevelaken (NL)
(74) Representative: Rasser, Jacobus Cornelis

(57) **Abstract**

Disclosed is a pyrolysis process for conversion of carbon based energy carrier material. The process comprises a step for sensitizing or activating the carbon based energy carrier material to increase its susceptibility to pyrolytic conversion. As a result of the sensitization step, the pyrolysis step itself may be carried out under relatively mild conditions.

The process comprises sensitizing the carbon-based energy carrier material to increase its susceptibility to pyrolytic conversion, and subjecting the sensitized carbon-based energy carrier material to thermal conversion.

## Description

### BACKGROUND OF THE INVENTION

### 1. Field of the Invention

The present invention relates to a pyrolysis process for conversion of carbon based energy carrier material. The process comprises a step for sensitizing or activating the carbon based energy carrier material to increase its susceptibility to pyrolytic conversion. As a result of the sensitization step, the pyrolysis step itself may be carried out under relatively mild conditions.

### 2. Description of the Related Art

Certain carbon based energy carrier materials, such as coal, tar sand, shale oil, and biomass are abundantly available, but notoriously difficult to convert to usable liquid fuel compositions. One available method for converting carbon based energy carrier materials that contain relatively low levels of moisture involves pyrolysis. Broadly defined, pyrolysis is a thermal conversion reaction carried out in an atmosphere that is substantially free of oxygen and hydrogen. Generally, pyrolysis is carried out at a temperature of up to 400 to 600 degrees centigrade and a pressure of 1 to 5 bar.

The term "pyrolysis" includes, but is not limited to, known thermal hydrocarbon conversion processes such as thermal cracking, visbreaking, coking, and delayed coking.

The temperature range is necessary to obtain meaningful conversion, but is otherwise undesirably high. At temperatures above about 360 degrees centigrade, extensive coke or char formation may cause a significant loss of energy, and result in fouling of the equipment. Moreover, energy carrier materials comprising significant amounts of carbohydrates, such as cellulose and lingo-cellulose, tend to form less desirable organic acids, gas and phenolic materials at elevated pyrolysis temperatures.

It is therefore desirable to provide a pyrolysis process that can be carried out under milder conditions of temperature and pressure than has heretofore been possible.
Furthermore, it is desirable to provide a pyrolysis process during which volatile and/or liquid reaction products are removed while the pyrolysis process is progressing, so as to reduce the exposure of these products to further pyrolysis reactions.

### BRIEF SUMMARY OF THE INVENTION

The present invention relates to a pyrolysis process for the conversion of a carbon-based energy carrier material comprising the steps of:
a) sensitizing the carbon-based energy carrier material to increase its susceptibility to pyrolytic conversion;
b) subjecting the sensitized carbon-based energy carrier material to thermal conversion at a temperature in the range of 100 to 550 degrees centigrade in a pyrolysis reactor, to obtain a liquid mixture of organic compounds comprising carbon, hydrogen, and oxygen.

In a preferred embodiment of the process, step b) is carried out at a pressure of less than one bar. In a further preferred embodiment, volatile reaction products are removed from the pyrolysis reactor as step b) progresses.

### DESCRIPTION OF ILLUSTRATIVE EMBODIMENTS

The following is a description of certain embodiments of the invention, given by way of example only.

An important aspect of the present invention is the step of sensitizing a carbon based energy carrier material prior to the pyrolysis step itself. Because the sensitized material has an increased susceptibility to pyrolytic conversion, the pyrolytic conversion itself may be carried out at a lower temperature than is normally employed for this type of reaction. As a result of this lower temperature, the conversion reaction involves less cracking of the molecules present in the reaction mixture. For example, cellulose is generally converted first to polysaccharides, which react further to organic acids, gas, char (coke) and phenolic materials. If lower pyrolysis temperatures are employed, the reaction mixture contains more polysaccharides, and less undesirable organic acids, gas, char (coke) and phenolic materials.

The more severe cracking can also be reduced by removing intermediate reaction products from the reaction mixture, so as to prevent them from being cracked further. In a preferred embodiment of the invention, volatile materials, which are in the gas phase at pyrolysis temperatures, are constantly removed from the pyrolysis reactor. This is possible, because the pre-sensitization step permits operation of the pyrolysis reaction at a slightly reduced pressure, that is, a pressure below one bar.

In an alternate embodiment the carbon-based energy carrier is in solid (e.g., particulate) form. Liquid product that is formed during the pyrolysis is constantly removed from the particulate material, for example by continuous filtration or vacuum filtration. In this context the term "particulate" encompasses liquids of a very high viscosity, such as tar.

The pyrolysis reaction is suitable for materials that have a relatively low moisture content. Suitable materials include coal, tar sand, shale oil, lignite, and biomass materials that have a low moisture content, such as straw, wood chips, saw dust, and the like. Biomass materials having by nature a high moisture content, such as bagasse, switch grass, beet pulp, and the like, require drying before they can be used as a feedstock for pyrolysis. As a drying step requires a significant energy input, these materials are less desirable or pyrolysis conversion.

There are various ways in which the carbon based energy carrier material may be sensitized prior to the pyrolysis step itself.

One process involves providing particles of the carbon based energy carrier material, and coating these particles with smaller particles of a catalytic material. The coated particles are subjected to thermal treatment, during which the energy carrier material becomes sensitized. This process is disclosed in detail in our co-pending patent application entitled *"Pretreatment of particulate carbon-based energy carrier material*", the disclosures of which are incorporated herein by reference.

Another process for sensitizing the carbon based energy carrier material is suitable for energy carrier materials that contain a polymer of photosynthetic origin. In this process, small particles of an inorganic material are embedded within the polymeric material of photosynthetic origin. This process is disclosed in detail in our co-pending patent application entitled *"Method of making a polymeric material of photosynthetic origin comprising particulate inorganic material ",* the disclosures of which are incorporated herein by reference. This method is also suitable for other carbon-based energy carriers, such as coal, tar sand, and shale oil.

Yet another process for sensitizing the carbon based energy carrier material comprises the step of contacting the carbon based energy carrier material with reaction products obtained in step b) of the process of the present invention. It will be understood that when the process is started no reaction product is yet available. Therefore, at this stage, the carbon based energy carrier material may be sensitized by some other method. It is also possible to start the reaction with non-sensitized material, and carry out the pyrolysis step under conventional conditions of temperature and pressure. For example, the reaction may be started at a temperature of up to 600 degrees centigrade, and a pressure between 1 and five bar. Under these conditions, relatively large amounts of organic acids and phenolic materials are produced. Although this is undesirable from the perspective of the need to make useful liquid fuels, this reaction product is practically suitable for mixing with the carbon based energy carrier material for sensitization purposes. Once enough reaction product is formed to operate the reaction with a continuous supply of sensitized material, the pyrolysis conditions can then be changed to a temperature of less than 500 degrees centigrade and, optionally, a pressure of less than one bar.

In a preferred embodiment, the process minimizes the amount of time that initial reaction products are exposed to pyrolysis reaction conditions. During the pyrolysis reaction, volatile reaction products are continuously removed from the pyrolysis reactor. This can be accomplished by connecting the pyrolysis reactor to a vacuum pump, via a cold trap. The vacuum pump is operated so as to keep the pressure within the reactor at a desired value, for example 0.8 bar. The reaction products that are in the gas phase at the reaction temperature and the reaction pressure, are pumped away and converted to the liquid phase in the cold trap. As a result, desirable components such as polysaccharides are prevented from reacting further to less desirable components such as organic acids and phenolic materials.

In a further preferred embodiment, the temperature in the reactor is increased relatively slowly. In a conventional pyrolysis reactor, the reactants are brought to a high temperature, in the range of 400 to 600 degrees centigrade, within a matter of seconds. In a preferred embodiment of the present invention, the temperature of the reactants is increased much more slowly, for example over a period of at least 5 minutes.

Specifically, in this preferred embodiment, the reactants in the pyrolysis reactor have a starting temperature Tstart. This may be ambient temperature, or it may be different temperature. For example, the reactants may have a temperature that is higher than ambient as a result of the sensitization pre-treatment. The temperature in the reactor is increased from Tstart to Tmax over time period t_{heating}. Preferably, Tmax is less than 500 degrees centigrade, and t_{heating} is at least 5 minutes. More preferably, Tmax is less than 400 degrees centigrade, and even more preferably less than 300 degrees centigrade. t_{heating} preferably is at least 10 minutes.

In this heating regime, conversion products will start to form when the reaction temperature reaches a certain value, probably around 200 degrees centigrade. As volatile reaction products are continuously removed from the reactor, these reaction products are not permitted to be cracked further. As the reaction temperature increases, less reactive components of the energy carrier material are converted. As the material is a sensitized energy carrier material, the final reaction temperature Tmax may be lower than the reaction temperature in conventional pyrolysis reactions. In a highly preferred embodiment, the carbon based energy carrier material is sensitized such that a Tmax of less than 350 degrees centigrade is sufficient to obtain a high level of conversion of the energy carrier material.

It is not desirable to slow the heating rate to the point that the heating time is more than one hour. Preferably, the heating time is less than 30 minutes, and even more preferably less than 15 minutes. Likewise, the reactor should not be kept at Tmax for extended periods of time. In a preferred embodiment the process reactor is cooled to a temperature of less than 200 degrees centigrade within 1 minute after reaching Tmax.

The heating regime during the heating time can be tailored to the specific needs of the operator. For example, the heating regime may be either continuous, or may be step-wise. If continuous, the temperature increase during the heating time may be linear.

Thus, the invention has been described by reference to certain embodiments discussed above. It will be recognized that these embodiments are susceptible to various modifications and alternative forms well known to those of skill in the art.

Many modifications in addition to those described above may be made to the process described herein without departing from the spirit and scope of the invention. Accordingly, although specific embodiments have been described, these are examples only and are not limiting upon the scope of the invention.

## Claims

1. Pyrolysis process for the conversion of a carbon-based energy carrier material comprising the steps of:
a) sensitizing the carbon-based energy carrier material to increase its susceptibility to pyrolytic conversion;
b) subjecting the sensitized carbon-based energy carrier material to thermal conversion at a temperature in the range of 250 to 550 degrees centigrade in a pyrolysis reactor, to obtain a liquid mixture of organic compounds comprising carbon, hydrogen, and oxygen.

2. The process of claim 1 wherein step b) is carried out at a pressure of less than 1 bar.

3. The process of claim 1 or claim 2 whereby during step b) volatile reaction products are removed from the pyrolysis reactor.

4. The process of any one of the preceding claims whereby step a) comprises the formation of particles of the carbon-based energy carrier material coated with particles of a catalytic material.

5. The process of any one of claims 1 to 3, wherein step a) comprises the formation of a polymer of photosynthetic origin, having embedded therein small particles of an inorganic material.

6. The process of any one of claims 1 to 3, further comprising the step of recycling to step a) part of the liquid mixture obtained in step b).

7. The process of any one of the preceding claims wherein step b) has a maximum temperature, Tₘₐₓ, such that Tₘₐₓ is less than 550 degrees centigrade, and the temperature in the pyrolysis reactor is increased from a starting temperature Tₛₜₐᵣₜ to Tₘₐₓ over a time period t_{heating} of at least 5 minutes.

8. The process of claim 7 wherein Tₘₐₓ is less than 400 degrees centigrade.

9. The process of claim 7 or 8 wherein Tₘₐₓ is less than 350 degrees centigrade.

10. The process of any of claims 7 to 9 wherein t_{heating} is at least 10 minutes.

11. The process of any one of claims 7 to 10 wherein t_{heating} is less than 30 minutes.

12. The process of any one of claims 7 to 11 wherein t_{heating} is less than 15 minutes.

13. The process of any one of claims 7 to 12 wherein the pyrolysis reactor is cooled to less than 200 degrees centigrade within 1 minute after reaching Tₘₐₓ.

14. The process of any one of claims 7 to 13 wherein the temperature increase during t_{heating} is step-wise.

15. The process of any one of claims 7 to 13 wherein the temperature increase during t_{heating} is continuous.

16. The process of claim 15 wherein the temperature increase during t_{heating} is linear.
